# EUROPEAN PATENT SPECIFICATION

(11) **EP 3 006 280 B1**
(45) Date of publication and mention of the grant of the patent: **24.01.2018**
(21) Application number: 15188197.6
(22) Date of filing: 02.10.2015
(51) Int. Cl.: B60S 1/48, B60S 1/52

(54) **WIPER DEVICE FOR MOTOR VEHICLES AND A MOTOR VEHICLE HAVING A WIPER DEVICE**
WISCHVORRICHTUNG FÜR FAHRZEUGE UND FAHRZEUG MIT EINER WISCHVORRICHTUNG
DISPOSITIF D'ESSUIE-GLACE POUR VÉHICULES À MOTEUR ET UN TEL VÉHICULE DOTÉ DUDIT DISPOSITIF

(30) Priority: 09.10.2014 DE 102014114687
(43) Date of publication of application: 13.04.2016
(73) Proprietor: Valeo Systèmes d'Essuyage, 78322 Le Mesnil Saint Denis (FR)
(72) Inventor: SCHAEUBLE, Michael, 71665 VAIHINGEN/ENZ (DE)
(74) Representative: Callu Danseux, Violaine

(56) References cited:
- DE-A1- 4 427 171
- DE-A1- 10 231 805
- DE-A1- 19 653 432
- GB-A- 1 546 250
- US-A- 5 012 977

## Description

### Prior Art

The invention relates to a wiper device for motor vehicles according to the preamble to Claim 1. The invention further relates to a motor vehicle having a wiper device according to the invention.

It is already known to have a wiper device for motor vehicles as disclosed in DE 41 17 795 C2.

The previously disclosed wiper device has a wiper arm, on which a number of spray nozzles are arranged physically separate from a wiper blade, which spray nozzles are positioned on either side in relation to the longitudinal extent of the wiper arm in the region of the wiper blade. Furthermore, the previously disclosed wiper device is configured in such a way that, in conjunction with operation of the wiper device for cleaning the vehicle windscreen, in each case only those spray nozzles which are situated in front of the wiper blade in the direction of movement of the wiper blade are actuated or are supplied with cleaning fluid. As a result, on the one hand, the consumption of cleaning fluid is reduced with a satisfactory cleaning result and, on the other hand, the driver's view is influenced as little as possible as a consequence of the cleaning fluid being displaced by the wiper blade in a timely fashion.

DE 44 27 171 discloses another wiper device for motor vehicles. DE 44 27 171 discloses the preamble of claim 1. A disadvantage associated with the previously disclosed wiper device is that the wiper arm is of relatively complicated design or has a relatively large installation space, as a result of the number of spray nozzles arranged on the wiper arm physically separate from the wiper blade. This is disadvantageous in the sense that, in the case of a recessed arrangement of the wiper blade or the wiper arm, a corresponding mounting space for the wiper arm with the wiper blade must be provided. In the case of an exposed arrangement of the wiper arms and the wiper blades, on the other hand, the relatively generously dimensioned wiper arm leads to a relatively large impairment of the driver's view. The same also applies fundamentally during operation of the wiper device, since the wiper arm exhibits a relatively large width, at least in the region of the wiper blade.

### Disclosure of the Invention

On the basis of the described prior art, the object of the invention is to improve a wiper device for motor vehicles according to the preamble to Claim 1 in such a way that, with the least possible impairment of the driver's view, i.e. with the most compact possible construction, a good cleaning effect is achieved in conjunction with low consumption of the cleaning fluid when operating the wiper device.

This object is accomplished according to the invention in a wiper device for motor vehicles having the characterizing features of Claim 1, in that at least one spray nozzle arranged immovably outside the area of coverage of the wiper blade on the vehicle windscreen is allocated to each wiper blade. In other words, this means that, in contrast to the prior art, the at least one spray nozzle allocated to each wiper blade is not situated on the wiper blade, and thus in the area of coverage of the wiper blade on the vehicle windscreen, but externally to the wiper blade and to the wiper arm. As a result, no structural changes in respect of the wiper arm and of the wiper blade are required compared with conventional wiper arms or wiper blades, so that the arrangement of a wiper arm and a wiper blade can be of particularly compact configuration.

Advantageous further developments of the wiper device for motor vehicles according to the invention are presented in the subordinate claims.

In order in each case to actuate only the one or more spray nozzles, which lie in front of the one or more wiper blades in the direction of wiping of the one or more wiper blades, it is necessary to be aware of the direction of movement of the wiper blades. According to the invention, it is proposed that the wiper motor is configured as a reversible wiper motor, and that an angular position of a drive shaft of the wiper motor connected to the wiper blade is supplied to the control device as an input value for the purpose of determining the angular position of the wiper blade.

It may be proposed that the control device is configured in such a way that the operation of a washer fluid pump for discharging the cleaning fluid by means of the at least one spray nozzle takes place in a time-controlled manner. The expression "in a time-controlled manner" is used in the context of the invention to denote either delayed actuation of the washer fluid pump during operation of the windscreen wiper system or actuation of the washer fluid pump for a defined period, for example 1.0 second.

In addition, or as an alternative hereto, it may also be proposed that the control device is configured in such a way that the operation of a washer fluid pump for the activation of the at least one spray nozzle takes place depending on input variables such as the driving speed or external temperature. This makes it possible, on the one hand, to optimize the cleaning effect during operation of the windscreen wiper system and, on the other hand, to reduce the consumption of cleaning fluid.

In order to minimize the obstruction of a driver's view during operation of the cleaning system, it may be proposed that the at least one spray nozzle produces a number of spray jets, of which the points of impact on the vehicle windscreen are situated within the area of coverage of the wiper blade allocated to the spray nozzle, and the vertical distance from the points of impact is the same in at least one predetermined position of the wiper blade. As a consequence of this, the whole of the cleaning fluid sprayed onto the vehicle windscreen is collected or wiped away at the same time by the wiper blade.

In an alternative embodiment of the proposal, in which the wiped area swept by the windscreen wiper is provided with cleaning fluid in a particularly uniform or homogeneous manner, it is proposed that at least one spray nozzle produces a number of spray jets, of which the points of impact on the vehicle windscreen are situated within the area of coverage of the wiper blade allocated to the spray nozzle and that, in at least one predetermined position of the wiper blade, the vertical distance of the points of impact from the wiper blade is different.

A further optimization of the consumption of cleaning fluid is achieved if the at least one spray nozzle is arranged in such a way relative to the vehicle windscreen that the spraying-on of the cleaning fluid takes place only within a partial swept area, in such a way that no cleaning fluid finds its way onto the vehicle windscreen in an angular range in front of a reverse point of the wiper blade.

In a preferred geometrical arrangement of the at least one spray nozzle, this is arranged on the motor vehicle along the peripheral area of the vehicle windscreen and preferably to the side of or beneath or above the vehicle windscreen.

In order to be able to provide the wiped area swept by the windscreen wipers with cleaning fluid over the widest possible area or as uniformly as possible, it is also advantageous, in the event of the provision of at least two spray nozzles, for these to be arranged in relation to the sides of the vehicle windscreen on different sides of the motor vehicle. As a result, the spray paths from the outlet from the respective spray nozzle until it impacts on the vehicle windscreen are reduced.

Furthermore it is advantageous, in the event of the provision of at least two spray nozzles, for these to be arranged at different locations on the vehicle windscreen.

For the optimization of the cleaning effect, it can further be proposed that the control device is configured in such a way that, depending on a mode of operation of the wiper device, the at least two spray nozzles are capable of being actuated differently from one another.

Further advantages, characterizing features and details of the invention can be appreciated from the following description of preferred illustrative embodiments and on the basis of the drawing.

The drawing depicts in:
- Fig. 1 and Fig. 2: a schematic representation of a first wiper device according to the invention during a movement of the wiper blades from a lower into an upper reverse position,
- Fig. 3 and Fig. 4: the wiper device according to Figs. 1 and 2 during a movement of the wiper blades from the upper into the lower reverse position,
- Fig. 5 and Fig. 6: a modified wiper device compared with Figs. 1 and 2, in which the spray nozzles are arranged in a lateral region of a vehicle windscreen, during a movement of the wiper blades from the lower into the upper reverse position,
- Fig. 7 to Fig. 9: further modified wiper devices, in which the spray nozzles are arranged in each case in different regions of the vehicle windscreen, during a movement of the wiper blades from the lower into the upper reverse position,
- Fig. 10 and Fig. 11: a wiper device, in which the spray nozzles are able to perform different cleaning programmes, with different directions of movement of the wiper blades, and
- Fig. 12 to Fig. 14: wiper devices of different designs in conjunction with an arrangement of the wiper blades in the opposite direction.

Identical elements or elements with an identical function are provided with identical reference designations in the Figures.

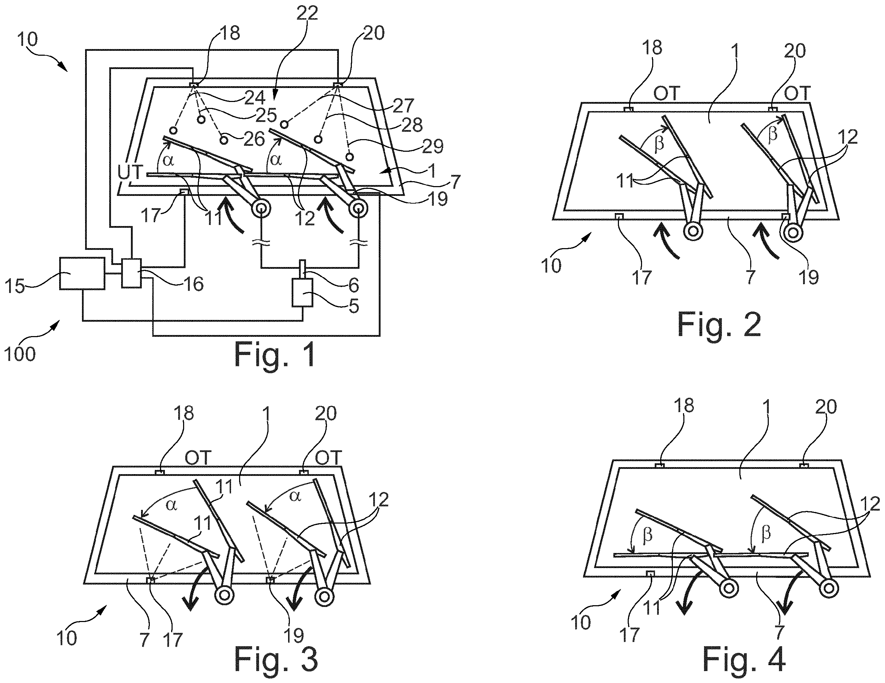

A first wiper device 10 according to the invention for cleaning a windscreen 1 of a motor vehicle 100, which vehicle is not illustrated in detail here, is illustrated in Figs. 1 to 4. The wiper device 10 has two wiper blades 11, 12, which are attached to or arranged on wiper arms and are capable of being moved back and forth between a lower reverse point UT and an upper reverse point OT by means of a wiper motor 5, of which the drive shaft 6 is arranged so that it is connected, at least indirectly, to the wiper arms or the wiper blades 11, 12. The two wiper blades 11, 12 are arranged at least substantially parallel to one another and in each case are moved in the same direction.

The wiper motor 5 is configured as a reversible wiper motor 5, i.e. the direction of rotation of the drive shaft 6 of the wiper motor 5 is variable or reversible. Furthermore, the wiper motor 5 has means that are familiar per se and accordingly are not illustrated here for recording the position of the drive shaft 6 and thus for recording the position of the wiper blades 11, 12. In particular, the angular position of the drive shaft 6 of the wiper motor 5 is supplied as an input value to a control device 15 for the wiper device 10. The control device 15 further serves for the actuation of at least one washer fluid pump 16, which on the one hand is connected to a reservoir for cleaning fluid, not illustrated here, and which on the other hand, in conjunction with operation or activation, makes the cleaning fluid available at pressure for at least one spray nozzle 17 to 20 of the wiper device 10.

In the illustrative embodiment of the wiper device 10 illustrated in Figs. 1 to 4, the two spray nozzles 17 and 18 are allocated to the wiper blade 11, whereas the two spray nozzles 19 and 20 are allocated to the wiper blade 12. In this case, the spray nozzles 17 and 19 are situated in the lower peripheral area of the windscreen 1, for example in the region of the windscreen frame 7 (alternatively in the region of the body of the motor vehicle 100 in the area of transition to the windscreen 1), whereas the two other spray nozzles 18 and 20 are arranged in the upper region of the windscreen 1 or in the region of the upper windscreen frame 7. In particular, all the spray nozzles 17 to 20 are arranged outside an area of coverage 22 of the wiper blades 11, 12 on the windscreen 1, the expression area of coverage 22 being used here to denote the region of the windscreen 1, which is produced by the wiper blades 11, 12 in the course of wiping.

Marked in Fig. 1 is an angle α of the wiper blades 11, 12, which is adopted after operation of the wiper device 10 after the wiper blades 11, 12 exit from the lower reverse position UT. For example, the angle α denotes an angular position of the wiper blades 11, 12, in which an activation of the washer fluid pump 16 takes place at the earliest, in order to permit the cleaning fluid to impact on the windscreen 1 for a small distance in front of the wiper blade 11, 12 in the direction of movement of the respective wiper blade 11, 12.

Marked in Fig. 1 in each case for the two spray nozzles 18 and 20, furthermore, are three spray jets 24 to 26 and 27 to 29, of which the points of impact on the windscreen 1 for the spray jets 24 to 26 of the spray nozzle 18 are arranged in such a way that the vertical distance of the points of impact of the spray jets 24 to 26 to the wiper blade 11 is of a different size, whereas the vertical distance of the points of impact of the spray jets 27 to 29 of the spray nozzle 20 to the wiper blade 12 is of the same size.

Illustrated in Fig. 1, furthermore, in conjunction with a movement of the wiper blades 11,12 from the direction of the lower reverse position UT in the direction of the upper reverse position OT, is the case in which only the two (upper) spray nozzles 18 and 20 are activated, whereas the two (lower) spray nozzles 17 and 19 are deactivated.

Illustrated in Fig. 2 is the case in which the two wiper blades 11, 12, originating from the lower reverse position UT, are situated at an angle β in front of the upper reverse position OT. In order to reduce the consumption of cleaning fluid, it is proposed for this case that the activated spray nozzles 18 and 20 corresponding to Fig. 1 are deactivated as soon as the angle β falls below a specific value.

As already mentioned, the wiper device 10 or the washer fluid pump 16 is actuated depending on the position of the wiper blades 11, 12 or the angle α and β, the angles α and β being between 10° and 30°, for example. In addition to the purely angle-dependent actuation of the wiper blades 11, 12, the actuation of the washer fluid pump 16 can also take place in a time-controlled manner, for example after a specific time following the activation of the wiper device 10 (if necessary, on condition that specific angles α or β of the wiper blades 11, 12 are observed), or during a specific period, e.g. for 1.0 second. The activation of the washer fluid pump 16 can also take place in addition by taking into account the speed of the vehicle or other environmental factors, for example the external temperature.

Illustrated in Figs. 3 and 4 of the wiper device 10 is the activation or the deactivation of the spray nozzles 17 to 20, when these move from the upper reverse position OT in the direction of the lower reverse position UT.

It can be appreciated in particular that the lower spray nozzles 17 and 19 are only activated from an angle α after starting from the upper reverse position OT, and that they are deactivated from an angle β before reaching the lower reverse position UT.

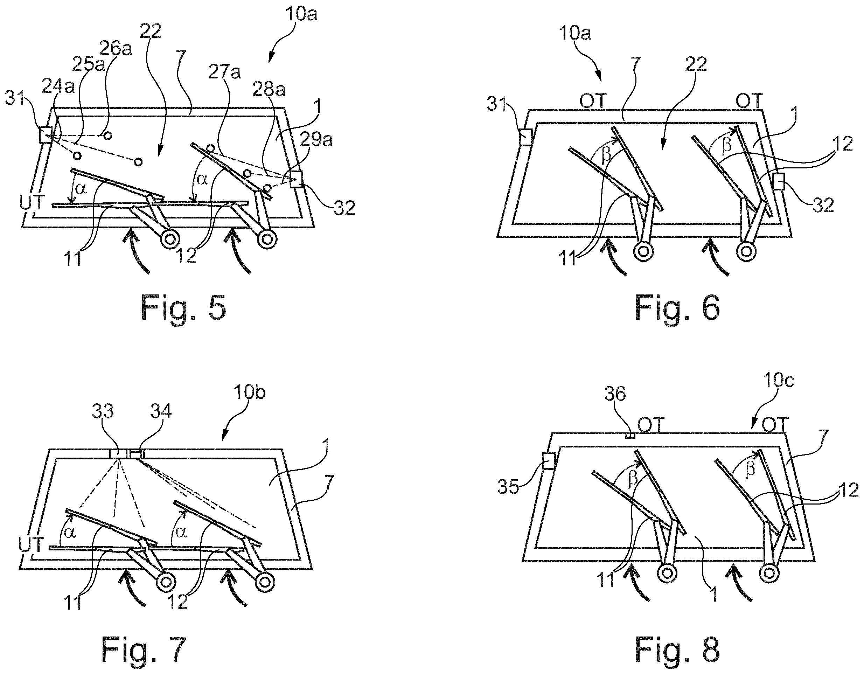

Illustrated in Figs. 5 and 6 is a modified wiper device 10a, which has only two spray nozzles 31, 32. Whereas one spray nozzle 31 is allocated to the wiper blade 11 and is situated in a lateral upper region of the windscreen 1 or of the windscreen frame 7, the other spray nozzle 32 is allocated to the wiper blade 12 and is situated on the opposite side in a lateral lower region of the windscreen 1 or of the windscreen frame 7. Both spray nozzles 31, 32 are likewise arranged outside the area of coverage 22 of the wiper blades 11, 12 on the windscreen 1 and are designed to produce three spray jets 24a to 26a or 27a to 29a in each case. By analogy with the embodiment of the wiper device 10 illustrated in Figs. 1 and 2, the points of impact of the spray jets 24a to 26a have a different vertical distance to the wiper blade 11, whereas the points of impact of the spray jets 27a to 29a have the same vertical distance to the wiper blade 12.

It also lies within the scope of the invention, of course, that the vertical distance of the points of impact of all the spray jets 26a to 29a to the respective wiper blade 11, 12 is of the same size or of a different size.

According to the illustration in Fig. 5, an activation of the wiper device 10a or of the washer fluid pump 16 via the control device 15 does not take place until the wiper blades 11, 12 move from their lower reverse position UT in the direction of the upper reverse position OT and a specific angle α is exceeded. Also, corresponding to the illustration in Fig. 6, the supply of cleaning fluid to the spray nozzles 31, 32 is stopped as soon as a specific angle β in front of the upper reverse position OT is not achieved.

In the illustrative embodiment of the wiper device 10b in Fig. 7, two spray nozzles 33, 34 are provided, which in the region of the upper edge of the windscreen 1 or on the windscreen frame 7 are arranged at a relatively close distance to one another, the one spray nozzle 33 being allocated to wiper blade 11 and the other spray nozzle 34 being allocated to wiper blade 12. What has been stated above in relation to the wiper device 10a also applies with regard to the actuation or activation of the two spray nozzles 33, 34.

Two spray nozzles 35, 36 are likewise proposed in the illustrative embodiment of the wiper device 10c according to Fig. 8, the one spray nozzle 35 allocated to the wiper blade 11 being situated in the upper region of one side of the windscreen 1 or of the windscreen frame 7, whereas the spray nozzle 36 allocated to the wiper blade 12 is situated approximately in the middle in the upper region of the windscreen 1 or of the windscreen frame 7.

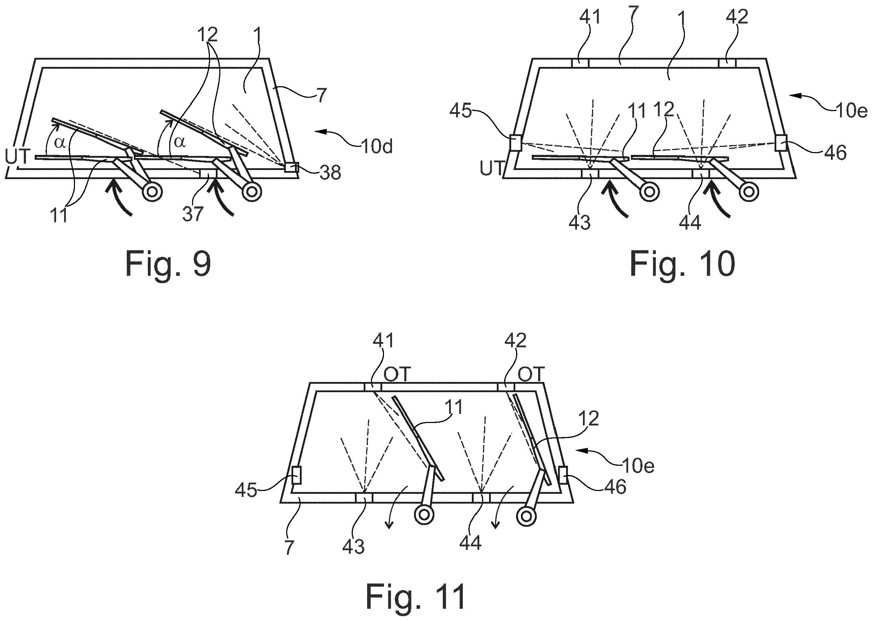

In the illustrative embodiment of the wiper device 10d illustrated in Fig. 9, both spray nozzles 37, 38 are arranged in the lower region of the windscreen 1 or of the windscreen frame 7. Whereas the one spray nozzle 37, which is allocated to the wiper blade 11, is situated between the two wiper arms of the wiper blades 11, 12, the spray nozzle 38 allocated to the wiper blade 12 is arranged in a lateral lower corner region of the windscreen 1 or of the windscreen frame 7.

In the illustrative embodiment of the invention illustrated in Figs. 10 and 11, the wiper device 10e has six spray nozzles 41 to 46 in total. The two spray nozzles 41, 42 are arranged in the upper region of the windscreen 1, whereas the two spray nozzles 43, 44 are arranged in the lower region of the windscreen 1. The two spray nozzles 45, 46 are situated in each case in a lower lateral region of the windscreen 1. Illustrated in Fig. 10 is the case in which the two wiper blades 11, 12 move from the direction of the lower reverse position UT in the direction of the upper reverse position OT. Only a relatively small quantity of cleaning fluid is sprayed directly in front of the respective wiper blade 11, 12 in this case by means of the two laterally arranged spray nozzles 45, 46, whereas the two lower spray nozzles 43, 44 distribute a relatively large quantity of cleaning fluid at different points of impact on the windscreen 1. The activation of the spray nozzles 43 to 46 in this case already takes place on leaving the lower reverse position UT. The two spray nozzles 41, 42 are deactivated on the other hand. The two lower spray nozzles 43, 44 serve to ensure the particularly intensive cleaning of the windscreen 1.

According to the illustration in Fig. 11, in conjunction with a movement of the wiper blades 11, 12 from their upper reverse position OT in the direction of the lower reverse position UT, a relatively small quantity of cleaning fluid is initially sprayed by means of the two upper spray nozzles 41, 42 directly in front of the respective wiper blade 11, 12, whereas the two lower spray nozzles 43, 44 apply a relatively large quantity of cleaning fluid at different points on the windscreen 1. The two lateral spray nozzles 45, 46, on the other hand, are deactivated. The upper spray nozzles 41, 42 are preferably deactivated after the passage of the spray jets by the wiper blades 11, 12.

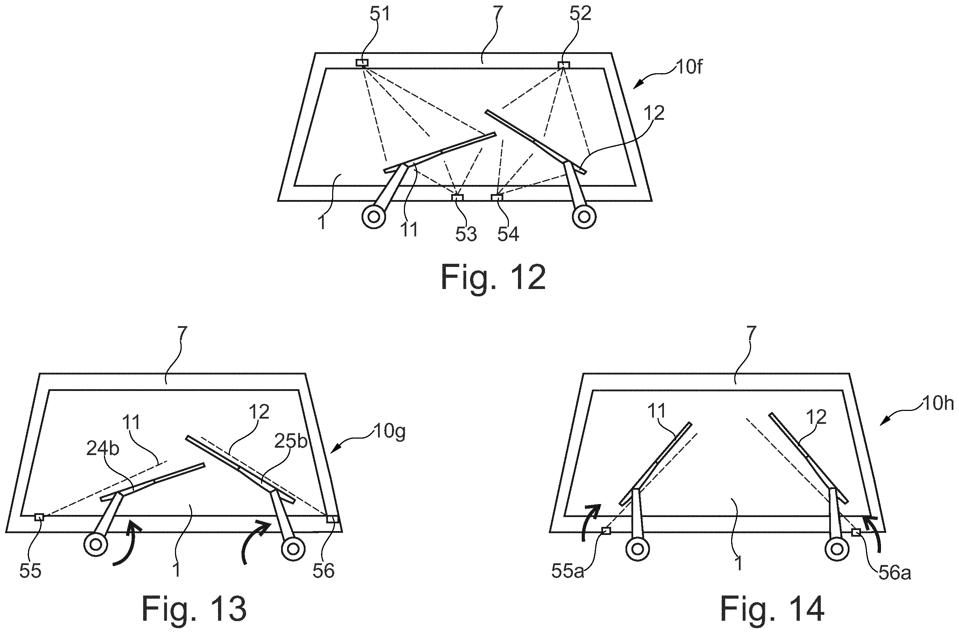

Depicted in Fig. 12 is an illustrative embodiment of the wiper device 10f, in which the two wiper blades 11, 12 are arranged in a so-called "butterfly arrangement", i.e. moving in opposite directions to one another. The wiper device 10f has four spray nozzles 51 to 54, the two spray nozzles 51, 52 being arranged in the upper region of the windscreen 1, whereas the two spray nozzles 53, 54 are situated in a lower, central region of the windscreen 1. Whereas the spray nozzles 51 and 53 are allocated to the wiper blade 11, the two spray nozzles 52 and 54 are allocated to the wiper blade 12. In the event of an upward movement of the two wiper blades 11, 12 from the lower reverse position UT (not illustrated here) the two upper spray nozzles 51 and 52 are activated, for example, whereas the two spray nozzles 53, 54 are activated in conjunction with a downward movement from the likewise not illustrated upper reverse position OT of the wiper blades 11, 12.

Depicted in Fig. 13 is the case of a wiper device 10g, in which two spray nozzles 55, 56 are proposed, the one spray nozzle 55 being allocated to the wiper blade 11, whereas the other spray nozzle 56 is allocated to the wiper blade 12. Both spray nozzles 55, 56 in each case produce only a single spray jet 24b, 25b, which has its point of impact in a central region of the windscreen 1. The two spray nozzles 55, 56 are situated in each case in a lower corner region of the windscreen 1. The activation of the two spray nozzles 55, 56 can take place, as illustrated, in conjunction with a movement of the wiper blades 11, 12 in the direction of the upper reverse position OT or, in addition or as an alternative, in conjunction with a movement of the wiper blades 11, 12 from the upper reverse position OT in the direction of the lower reverse position UT.

The wiper device 10h illustrated in Fig. 14 differs from the wiper device 10g according to Fig. 13 in that the two spray nozzles 55a, 56a have moved slightly loser together in the direction of the centre of the windscreen 1. What has been stated above in relation to Fig. 13 applies in other respects.

The wiper devices 10, 10a to 10h described above can be adapted or modified in many different ways without deviating from the idea of invention.

### List of Reference Designations

- 1: windscreen
- 5: wiper motor
- 6: drive shaft
- 7: windscreen frame

- 10, 10a-10h: wiper device
- 11: wiper blade
- 12: wiper blade
- 15: control device
- 16: washer fluid pump
- 17: spray nozzle
- 18: spray nozzle
- 19: spray nozzle
- 20: spray nozzle
- 22: area of coverage
- 24, 24a, 24b: spray jet
- 25, 25a, 25b: spray jet
- 26, 26a: spray jet
- 27, 27a: spray jet
- 28, 28a: spray jet
- 29, 29a: spray jet
- 31-38: spray nozzle
- 41: spray nozzle
- 42: spray nozzle
- 43-46: spray nozzle
- 51-54: spray nozzle
- 55, 55a: spray nozzle
- 56, 56a: spray nozzle

- 100: motor vehicle

- UT: lower reverse position
- OT: upper reverse position

- α: angle
- β: angle

## Claims

1. Wiper device (10; 10a to 10h) for motor vehicles (100), having at least one wiper blade (11, 12) capable of being driven by a wiper motor (5), at least one spray nozzle (17 to 20, 31 to 38; 41 to 46; 51 to 54; 55; 55a; 56; 56a) for the application of a cleaning fluid to a vehicle windscreen (1), whereby the at least one spray nozzle (17 to 20, 31 to 38; 41 to 46; 51 to 54; 55; 55a; 56; 56a) is arranged physically separate from the at least one wiper blade (11, 12), and having a control device (15) for controlling the discharge of the cleaning fluid by means of the at least one spray nozzle (17 to 20, 31 to 38; 41 to 46; 51 to 54; 55; 55a; 56; 56a) depending on the angular position of the at least one wiper blade (11, 12) in conjunction with a wiping movement of the wiper blade (11, 12), such that the cleaning fluid, when observed in the direction of wiping of the wiper blade (11, 12), is applied to the vehicle windscreen (1) at least in front of the wiper blade (11, 12),wherein the at least one spray nozzle (17 to 20, 31 to 38; 41 to 46; 51 to 54; 55; 55a; 56; 56a) arranged immovably outside an area of coverage (22) of the wiper blade (11, 12) on the vehicle windscreen (1) is allocated to each wiper blade (11, 12).
**characterized in that**,
the wiper motor (5) is configured as a reversible wiper motor (5), and that an angular position of a drive shaft (6) of the wiper motor (5) connected to the wiper blade (11, 12) is supplied to the control device (15) as an input value for the purpose of determining the angular position of the wiper blade (11, 12).

2. Wiper device according to Claim 1,
**characterized in that**,
the control device (15) is configured in such a way that the operation of a washer fluid pump (16) for discharging the cleaning fluid by means of the at least one spray nozzle (17 to 20, 31 to 38; 41 to 46; 51 to 54; 55; 55a; 56; 56a) takes place in a time-controlled manner.

3. Wiper device according to Claim 1,
**characterized in that**,
the control device (15) is configured in such a way that the operation of a washer fluid pump (16) for the activation of the at least one spray nozzle (17 to 20, 31 to 38; 41 to 46; 51 to 54; 55; 55a; 56; 56a) takes place depending on input variables such as the driving speed or external temperature.

4. Wiper device according to one of Claims 1 to 3,
**characterized in that**,
at least one spray nozzle (17 to 20, 31 to 38; 41 to 46; 51 to 54) produces a number of spray jets (24 to 29; 24a to 29a; 24b, 25b), of which the points of impact on the vehicle windscreen (1) are situated within the area of coverage (22) of the wiper blade (11, 12) allocated to the spray nozzle (17 to 20, 31 to 38; 41 to 46; 51 to 54) and the vertical distance from the points of impact to the wiper blade (11, 12) is different in at least one predetermined position of the wiper blade.

5. Wiper device according to one of Claims 1 to 3,
**characterized in that**,
at least one spray nozzle (17 to 20, 31 to 38; 41 to 46; 51 to 54) produces a number of spray jets (24 to 29; 24a to 29a; 24b, 25b), of which the points of impact on the vehicle windscreen (1) are situated within the area of coverage (22) of the wiper blade (11, 12) allocated to the spray nozzle (17 to 20, 31 to 38; 41 to 46; 51 to 54) and in at least one predetermined position of the wiper blade (11, 12) the vertical distance from the points of impact to the wiper blade (11, 12) is the same.

6. Wiper device according to one of Claims 1 to 5,
**characterized in that**,
the at least one spray nozzle (17 to 20, 31 to 38; 41 to 46; 51 to 54; 55; 55a; 56; 56a) is arranged in such a way relative to the vehicle windscreen (1) that the spraying-on of the cleaning fluid takes place only within a partial swept area, in such a way that no cleaning fluid finds its way onto the vehicle windscreen (1) in an angular range (α, β) in front of a reverse position (UT, OT of the wiper blade (11, 12).

7. Wiper device according to one of Claims 1 to 6,
**characterized in that**,
the at least one spray nozzle (17 to 20, 31 to 38; 41 to 46; 51 to 54; 55; 55a; 56; 56a) is preferably arranged along the peripheral area of the vehicle windscreen (1) and preferably to the side of or beneath or above the vehicle windscreen (1) on the motor vehicle (100).

8. Wiper device according to one of Claims 1 to 6,
**characterized in that**,
in the event of the provision of at least two spray nozzles (17 to 20, 31 to 38; 41 to 46; 51 to 54; 55; 55a; 56; 56a), these are arranged in relation to the sides of the vehicle windscreen (1) on different sides of the motor vehicle (100).

9. Wiper device according to Claim 7 or 8,
**characterized in that**,
in the event of the provision of at least two spray nozzles (17 to 20, 31 to 38; 41 to 46; 51 to 54; 55; 55a; 56; 56a), these are arranged at different locations on the vehicle windscreen (1).

10. Wiper device according to claim 8 or 9,
**characterized in that**,
the control device (15) is configured in such a way that, depending on a mode of operation of the wiper device (10), the at least two spray nozzles (17 to 20, 31 to 38; 41 to 46; 51 to 54; 55; 55a; 56; 56a) are capable of being actuated differently from one another.

11. Vehicle (100) having a wiper device (10; 10a to 10h) according to one of Claims 1 to 10.

## Patentansprüche

1. Wischvorrichtung (10; 10a bis 10h) für Fahrzeuge (100), mit wenigstens einem, von einem Wischermotor (5) antreibbaren Wischblatt (11, 12), wenigstens einer Sprühdüse (17 bis 20, 31 bis 38; 41 bis 46; 51 bis 54; 55; 55a; 56; 56a) zum Ausbringen eines Reinigungsfluids auf eine Fahrzeugscheibe (1), wobei die wenigstens eine Sprühdüse (17 bis 20, 31 bis 38; 41 bis 46; 51 bis 54; 55; 55a; 56; 56a) örtlich getrennt von dem wenigstens einen Wischblatt (11, 12) angeordnet ist, und mit einer Steuereinrichtung (15) zur Ansteuerung der Ausbringung des Reinigungsfluids mittels der wenigstens einen Sprühdüse (17 bis 20, 31 bis 38; 41 bis 46; 51 bis 54; 55; 55a; 56; 56a) in Abhängigkeit von der Winkelstellung des wenigstens einen Wischblatts (11, 12) bei einer Wischbewegung des Wischblatts (11, 12), derart, dass das Reinigungsfluid in Wischrichtung des Wischblatts (11, 12) betrachtet zumindest vor das Wischblatt (11, 12) auf die Fahrzeugscheibe (1) aufbringbar ist, wobei jedem Wischblatt (11, 12) die wenigstens eine, ortsfest außerhalb eines Überdeckungsbereichs (22) des Wischblatts (11, 12) mit der Fahrzeugscheibe (1) angeordnete Sprühdüse (17 bis 20, 31 bis 38; 41 bis 46; 51 bis 54; 55; 55a; 56; 56a) zugeordnet ist.
**dadurch gekennzeichnet,**
**dass** der Wischermotor (5) als reversierbarer Wischermotor (5) ausgebildet ist, und dass eine Winkelstellung einer mit dem Wischblatt (11, 12) verbundenen Abtriebswelle (6) des Wischermotors (5) der Steuereinrichtung (15) zur Bestimmung der Winkelstellung des Wischblatts (11, 12) als Eingangswert zuführbar ist.

2. Wischvorrichtung nach Anspruch 1,
**dadurch gekennzeichnet,**
**dass** die Steuereinrichtung (15) derart ausgebildet ist, dass das Betätigen einer Waschflüssigkeitspumpe (16) zur Ausbringung des Reinigungsfluids mittels der wenigstens einen Sprühdüse (17 bis 20, 31 bis 38; 41 bis 46; 51 bis 54; 55; 55a; 56; 56a) zeitgesteuert erfolgt.

3. Wischvorrichtung nach Anspruch 1,
**dadurch gekennzeichnet,**
**dass** die Steuereinrichtung (15) derart ausgebildet ist, dass das Betätigen einer Waschflüssigkeitspumpe (16) zur Aktivierung der wenigstens einen Sprühdüse (17 bis 20, 31 bis 38; 41 bis 46; 51 bis 54; 55; 55a; 56; 56a) in Abhängigkeit von Eingangsgrößen wie Fahrgeschwindigkeit oder Außentemperatur erfolgt.

4. Wischvorrichtung nach einem der Ansprüche 1 bis 3,
**dadurch gekennzeichnet,**
**dass** wenigstens eine Sprühdüse (17 bis 20, 31 bis 38; 41 bis 46; 51 bis 54) mehrere Sprühstrahlen (24 bis 29; 24a bis 29a; 24b, 25b) erzeugt, deren Auftreffpunkte auf der Fahrzeugscheibe (1) sich innerhalb des Überdeckungsbereichs (22) des der Sprühdüse (17 bis 20, 31 bis 38; 41 bis 46; 51 bis 54) zugeordneten Wischblatts (11, 12) befinden und in zumindest einer vorbestimmten Stellung des Wischblatts der lotrechte Abstand der Auftreffpunkte zum Wischblatt (11, 12) unterschiedlich ist.

5. Wischvorrichtung nach einem der Ansprüche 1 bis 3,
**dadurch gekennzeichnet,**
**dass** wenigstens eine Sprühdüse (17 bis 20, 31 bis 38; 41 bis 46; 51 bis 54) mehrere Sprühstrahlen (24 bis 29; 24a bis 29a; 24b, 25b) erzeugt, deren Auftreffpunkte auf der Fahrzeugscheibe (1) sich innerhalb des Überdeckungsbereichs (22) des der Sprühdüse (17 bis 20, 31 bis 38; 41 bis 46; 51 bis 54) zugeordneten Wischblatts (11, 12) befinden und in zumindest einer vorbestimmten Stellung des Wischblatts (11, 12) der lotrechte Abstand der Auftreffpunkte zum Wischblatt (11, 12) gleich ist.

6. Wischvorrichtung nach einem der Ansprüche 1 bis 5,
**dadurch gekennzeichnet,**
**dass** die wenigstens eine Sprühdüse (17 bis 20, 31 bis 38; 41 bis 46; 51 bis 54; 55; 55a; 56; 56a) derart relativ zur Fahrzeugscheibe (1) angeordnet ist, dass das Aufsprühen des Reinigungsfluids nur innerhalb eines Teilwischfelds erfolgt, derart, dass kein Reinigungsfluid in einem Winkelbereich (α, β) vor einer Umkehrposition (UT, OT des Wischblatts (11, 12) auf die Fahrzeugscheibe (1) erfolgt.

7. Wischvorrichtung nach einem der Ansprüche 1 bis 6,
**dadurch gekennzeichnet,**
**dass** die wenigstens eine Sprühdüse (17 bis 20, 31 bis 38; 41 bis 46; 51 bis 54; 55; 55a; 56; 56a) bevorzugt entlang des Randbereichs der Fahrzeugscheibe (1) und bevorzugt seitlich oder unterhalb oder oberhalb der Fahrzeugscheibe (1) am Fahrzeug (100) angeordnet ist.

8. Wischvorrichtung nach einem der Ansprüche 1 bis 6
**dadurch gekennzeichnet,**
**dass** beim vorsehen wenigstens zweier Sprühdüsen (17 bis 20, 31 bis 38; 41 bis 46; 51 bis 54; 55; 55a; 56; 56a) diese in Bezug auf die Seiten der Fahrzeugscheibe (1) an unterschiedlichen Seiten am Fahrzeug (100) angeordnet sind.

9. Wischvorrichtung nach Anspruch 7 oder 8,
**dadurch gekennzeichnet,**
**dass** beim Vorsehen wenigstens zweier Sprühdüsen (17 bis 20, 31 bis 38; 41 bis 46; 51 bis 54; 55; 55a; 56; 56a) diese an unterschiedlichen Orten der Fahrzeugscheibe (1) angeordnet sind.

10. Wischvorrichtung nach Anspruch 8 oder 9,
**dadurch gekennzeichnet,**
**dass** die Steuereinrichtung (15) derart ausgebildet ist, dass in Abhängigkeit einer Betriebsart der Wischvorrichtung (10) die wenigstens zwei Sprühdüsen (17 bis 20, 31 bis 38; 41 bis 46; 51 bis 54; 55; 55a; 56; 56a) unterschiedlich voneinander ansteuerbar sind.

11. Fahrzeug (100) mit einer Wischvorrichtung (10; 10a bis 10h) nach einem der Ansprüche 1 bis 10.

## Revendications

1. Dispositif d'essuie-glace (10 ; 10a à 10h) pour véhicules à moteur (100), comportant au moins un balai d'essuie-glace (11, 12) apte à être entraîné par un moteur d'essuie-glace (5), au moins une buse de pulvérisation (17 à 20, 31 à 38 ; 41 à 46 ; 51 à 54 ; 55 ; 55a ; 56 ; 56a) pour l'application d'un fluide de nettoyage à un pare-brise (1) de véhicule, la ou les buses de pulvérisation (17 à 20, 31 à 38 ; 41 à 46 ; 51 à 54 ; 55 ; 55a ; 56 ; 56a) étant disposées de façon à être physiquement séparées du ou des balais d'essuie-glace (11, 12), et comportant un dispositif de commande (15) servant à commander l'éjection du fluide de nettoyage au moyen de la ou des buses de pulvérisation (17 à 20, 31 à 38 ; 41 à 46 ; 51 à 54 ; 55 ; 55a ; 56 ; 56a) en fonction de la position angulaire du ou des balais d'essuie-glace (11, 12) conjointement avec un mouvement de balayage du balai d'essuie-glace (11, 12), de telle sorte que le fluide de nettoyage, lorsqu'il est observé dans la direction de balayage du balai d'essuie-glace (11, 12), soit appliqué au pare-brise (1) de véhicule au moins devant le balai d'essuie-glace (11, 12), la ou les buses de pulvérisation (17 à 20, 31 à 38 ; 41 à 46 ; 51 à 54 ; 55 ; 55a ; 56 ; 56a) disposées de manière immobile à l'extérieur d'un rayon (22) du balai d'essuie-glace (11, 12) sur le pare-brise (1) de véhicule étant associées à chaque balai d'essuie-glace (11, 12),
**caractérisé en ce que**,
le moteur d'essuie-glace (5) est configuré sous la forme d'un moteur d'essuie-glace (5) réversible, et **en ce qu'**une position angulaire d'un arbre d'entraînement (6) du moteur d'essuie-glace (5) raccordé au balai d'essuie-glace (11, 12) est fournie au dispositif de commande (15) en tant que valeur d'entrée pour la détermination de la position angulaire du balai d'essuie-glace (11, 12) .

2. Dispositif d'essuie-glace selon la revendication 1,
**caractérisé en ce que**,
le dispositif de commande (15) est configuré de telle sorte que le fonctionnement d'une pompe à fluide de lavage (16) pour éjecter le fluide de nettoyage au moyen de la ou des buses de pulvérisation (17 à 20, 31 à 38 ; 41 à 46 ; 51 à 54 ; 55 ; 55a ; 56 ; 56a) se fasse d'une manière régulée sur le plan temporel.

3. Dispositif d'essuie-glace selon la revendication 1,
**caractérisé en ce que**,
le dispositif de commande (15) est configuré de telle sorte que le fonctionnement d'une pompe à fluide de lavage (16) pour l'activation de la ou des buses de pulvérisation (17 à 20, 31 à 38 ; 41 à 46 ; 51 à 54 ; 55 ; 55a ; 56 ; 56a) se fasse en fonction de variables en entrée telles que la vitesse de conduite ou la température extérieure.

4. Dispositif d'essuie-glace selon l'une des revendications 1 à 3,
**caractérisé en ce que**,
au moins une buse de pulvérisation (17 à 20, 31 à 38 ; 41 à 46 ; 51 à 54) produit un certain nombre de jets de pulvérisation (24 à 29 ; 24a à 29a ; 24b, 25b), dont les points d'impact sur le pare-brise (1) de véhicule sont situés au sein du rayon (22) du balai d'essuie-glace (11, 12) associé à la buse de pulvérisation (17 à 20, 31 à 38 ; 41 à 46 ; 51 à 54) et la distance verticale des points d'impact au balai d'essuie-glace (11, 12) est différente dans au moins une position prédéterminée du balai d'essuie-glace.

5. Dispositif d'essuie-glace selon l'une des revendications 1 à 3,
**caractérisé en ce que**,
au moins une buse de pulvérisation (17 à 20, 31 à 38 ; 41 à 46 ; 51 à 54) produit un certain nombre de jets de pulvérisation (24 à 29 ; 24a à 29a ; 24b, 25b), dont les points d'impact sur le pare-brise (1) de véhicule sont situés au sein du rayon (22) du balai d'essuie-glace (11, 12) associé à la buse de pulvérisation (17 à 20, 31 à 38 ; 41 à 46 ; 51 à 54) et, dans au moins une position prédéterminée du balai d'essuie-glace (11, 12), la distance verticale des points d'impact au balai d'essuie-glace (11, 12) est égale.

6. Dispositif d'essuie-glace selon l'une des revendications 1 à 5,
**caractérisé en ce que**,
la ou les buses de pulvérisation (17 à 20, 31 à 38 ; 41 à 46 ; 51 à 54 ; 55 ; 55a ; 56 ; 56a) sont disposées d'une telle façon par rapport au pare-brise (1) de véhicule que la pulvérisation du fluide de nettoyage se fait uniquement dans une zone de balayage partielle, de telle sorte que le fluide de nettoyage ne puisse se répandre sur le pare-brise (1) de véhicule dans une plage angulaire (α, β) située devant une position d'inversion de direction (UT, OT) du balai d'essuie-glace (11, 12).

7. Dispositif d'essuie-glace selon l'une des revendications 1 à 6,
**caractérisé en ce que**,
la ou les buses de pulvérisation (17 à 20, 31 à 38 ; 41 à 46 ; 51 à 54 ; 55 ; 55a ; 56 ; 56a) sont de préférence disposées le long de la zone périphérique du pare-brise (1) de véhicule et de préférence sur le côté ou en dessous ou au-dessus du pare-brise (1) de véhicule sur le véhicule à moteur (100).

8. Dispositif d'essuie-glace selon l'une des revendications 1 à 6,
**caractérisé en ce que**,
si au moins deux buses de pulvérisation (17 à 20, 31 à 38 ; 41 à 46 ; 51 à 54 ; 55 ; 55a ; 56 ; 56a) sont présentes, celles-ci sont disposées par rapport aux côtés du pare-brise (1) de véhicule sur des côtés différents du véhicule à moteur (100) .

9. Dispositif d'essuie-glace selon la revendication 7 ou 8,
**caractérisé en ce que**,
si au moins deux buses de pulvérisation (17 à 20, 31 à 38 ; 41 à 46 ; 51 à 54 ; 55 ; 55a ; 56 ; 56a) sont présentes, celles-ci sont disposées à des emplacements différents sur le pare-brise (1) de véhicule.

10. Dispositif d'essuie-glace selon la revendication 8 ou 9,
**caractérisé en ce que**,
le dispositif de commande (15) est configuré de telle sorte que, en fonction d'un mode de fonctionnement du dispositif d'essuie-glace (10), les au moins deux buses de pulvérisation (17 à 20, 31 à 38 ; 41 à 46 ; 51 à 54 ; 55 ; 55a ; 56 ; 56a) sont aptes à être actionnées de manière différente les unes par rapport aux autres.

11. Véhicule (100) comportant un dispositif d'essuie-glace (10 ; 10a à 10h) selon l'une des revendications 1 à 10.
